(19) Europäisches Patentamt
European Patent Office
Office européen des brevets

(11) **EP 2 756 593 B1**

(12) **FASCICULE DE BREVET EUROPEEN**

(45) Date de publication et mention
de la délivrance du brevet:
**21.11.2018 Bulletin 2018/47**

(51) Int Cl.:
*H02P 21/05* (2006.01)       *H02P 25/02* (2016.01)
*B60L 15/20* (2006.01)       *H02P 25/04* (2006.01)
*H02P 21/00* (2016.01)       *H02P 25/024* (2016.01)

(21) Numéro de dépôt: **12767055.2**

(22) Date de dépôt: **10.09.2012**

(86) Numéro de dépôt international:
**PCT/FR2012/052018**

(87) Numéro de publication internationale:
**WO 2013/038097 (21.03.2013 Gazette 2013/12)**

(54) **PROCEDE ET DISPOSITIF DE COMMANDE D'UN GROUPE MOTOPROPULSEUR**

VERFAHREN UND VORRICHTUNG ZUR STEUERUNG EINES ANTRIEBSSTRANGS

METHOD AND DEVICE FOR CONTROLLING A POWERTRAIN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.09.2011 FR 1158085**

(43) Date de publication de la demande:
**23.07.2014 Bulletin 2014/30**

(73) Titulaire: **Renault S.A.S.**
**92100 Boulogne-Billancourt (FR)**

(72) Inventeurs:
• **MERIENNE, Ludovic**
  **F-91140 Villejust (FR)**
• **MALOUM, Abdelmalek**
  **F-94550 Chevilly Larue (FR)**

(56) Documents cités:
**JP-A- 8 242 600          US-A1- 2002 175 649
US-A1- 2004 135 533**

## Description

L'invention a pour domaine technique la commande des moteurs électriques, et en particulier la commande des moteurs électriques de type synchrone à rotor bobiné.

Un moteur électrique de type synchrone à rotor bobiné comprend une partie fixe appelée stator et une partie mobile appelée rotor. Le stator comprend trois bobines décalées de 120° et alimentées en courant alternatif. Le rotor comprend une bobine alimentée en courant continu.

Les courants des phases du stator dépendent des résistances et inductances du rotor et du stator ainsi que de l'inductance mutuelle entre le rotor et le stator.

La commande d'un tel système nécessite de prendre en compte des phénomènes de saturation des commandes, dus notamment aux limites en tension de la batterie.

Il est connu du document US3851234, une méthode pour éviter la saturation magnétique en réduisant la vitesse du moteur ou le couple fourni.

Il est connu du document US5015937, la commande d'une machine synchrone à rotor bobiné en boucle ouverte avec des tables de données pour éviter les saturations.

Enfin, il est connu du document US6181091, la commande d'une machine synchrone à aimant permanent dans laquelle la saturation est évitée en modifiant le fonctionnement de la PWM (Pulse Width Modulation, selon un terme anglo-saxon bien connu de l'homme du métier) assurant les tensions sur chaque branche du moteur.

Mais il n'est pas prévu dans l'état de la technique une saturation permettant de conserver un découplage dynamique des commandes.

Un but de la présente invention est d'améliorer la qualité de régulation d'un moteur électrique de type synchrone à rotor bobiné grâce à une saturation qui conserve le découplage entre la commande du rotor et celle du stator.

Selon un mode de mise en oeuvre, on définit un procédé de commande d'un groupe motopropulseur équipant un véhicule automobile et comprenant un moteur électrique muni d'un rotor et d'un stator, comprenant :

- une régulation des courants du rotor et du stator grâce à des signaux de commande du moteur électrique, lesdits courants et lesdits signaux de commande étant exprimés dans un repère tournant, par exemple le repère de Park, et comprenant une pluralité d'axes, lesdits signaux de commande étant issus d'une première transformation comprenant un changement de variable permettant le découplage dynamique entre les signaux de commande suivant chacun des axes de ladite pluralité d'axes ;
- une saturation desdits signaux de commande issus de ladite première transformation pour satisfaire les contraintes liées à une batterie équipant le véhicule automobile et connectée au moteur électrique en écrêtant les signaux de commandes ($\sim Vd, \sim Vq, \sim Vf$) lorsque ces signaux sortent des intervalles définis par les bornes maximales et minimales dépendent de la valeur de la tension de batterie (Vbat); et
- un blocage d'une partie au moins des consignes de courant de la régulation si les signaux de commande sont saturés.

Le procédé de commande a pour avantage un découplage total entre les consignes de courant du rotor et les consignes de courant du stator permettant un suivi de consigne de couple à la roue amélioré. Ce découplage est conservé pendant la saturation puisque la saturation est appliquée aux signaux de commande découplés exprimés selon la première transformation. De plus, il est possible d'assurer un contrôle total des courants en bloquant les consignes de courant.

En d'autres termes, la stratégie de saturation assure la stabilité grâce à l'écrêtage effectué dans l'espace découplé. De plus, les consignes de courant étant recalculées s'il y a saturation, cela permet d'atteindre des valeurs de courants stables le plus proche des consignes réelles même si les consignes sont inatteignables. Les consignes de courant recalculées sont donc les consignes de courant maximum atteignables.

Selon une caractéristique, le procédé comprend en outre une deuxième transformation comprenant un changement de variable inverse dudit changement de variable permettant le découplage dynamique de manière à exprimer les signaux de commande après saturation dans ledit repère tournant sans changement de variable.

Ainsi, il est alors possible d'exprimer les signaux de commande directement dans le repère de Park par exemple.

Selon une caractéristique supplémentaire, le procédé comprend en outre une communication d'une information relative à la saturation des signaux de commande et le blocage des consignes de courant de la régulation est réalisé en fonction de cette information.

Il est ainsi possible de bloquer les consignes de courant de manière à éviter la saturation des signaux de commande.

Selon un autre mode de mise en oeuvre, on définit un système de commande d'un groupe motopropulseur équipant un véhicule automobile et comprenant un moteur électrique muni d'un rotor et d'un stator, comprenant :

- des moyens de régulation des courants du rotor et du stator grâce à des signaux de commande du moteur électrique, lesdits courants et lesdits signaux de commande étant exprimés dans un repère tournant, par exemple le repère de Park et comprenant une pluralité d'axes, lesdits signaux de commande étant issus d'une première transformation comprenant un changement de variable permettant le découplage dynamique des signaux de commande suivant chacun des axes de ladite pluralité d'axes ;

- des moyens de saturation desdits signaux de commande issus de ladite de ladite première transformation pour satisfaire les contraintes liées à une batterie équipant le véhicule automobile et connectée au moteur électrique en écrêtant les signaux de commandes (~Vd,~Vq,~Vf) lorsque ces signaux sortent des intervalles définis par les bornes maximales et minimales dépendent de la valeur de la tension de batterie (Vbat); et
- un moyen de blocage configuré pour réaliser le blocage d'une partie au moins des consignes de courant des moyens de régulation si les signaux de commandes sont saturés.

Selon une caractéristique, le système comprend en outre un moyen de calcul d'une deuxième transformation comprenant un changement de variable inverse dudit changement de variable permettant le découplage dynamique de manière à exprimer les signaux de commande après saturation dans ledit repère tournant sans changement de variable.

Selon une caractéristique supplémentaire, le système comprend en outre des moyens de communication d'une information relative à la saturation des signaux de commande et le moyen de blocage bloque les consignes de courant des moyens de régulation en fonction de cette information.

D'autres buts, caractéristiques et avantages apparaîtront à la lecture de la description suivante donnée uniquement en tant qu'exemple non limitatif et faite en référence aux dessins annexés sur lesquels :

- la figure 1 illustre un procédé de commande d'un groupe motopropulseur électrique, et
- la figure 2 illustre un dispositif de commande d'un groupe motopropulseur électrique.

Pour assurer la régulation d'un groupe motopropulseur comprenant un moteur synchrone comprenant un stator et un rotor et équipant un véhicule, on utilise un onduleur permettant de commander la tension des phases du stator et un hacheur pour commander la tension du rotor. Ces deux dispositifs sont alimentés par une batterie équipant le véhicule.

On utilise également un repère de Park qui permet d'exprimer les grandeurs électriques dans un repère tournant par exemple lié au rotor dans le cas d'un moteur synchrone. Ce repère comprend trois axes : d, q, et f. Les axes d et q sont associés au stator et l'axe f est associé au rotor. Les signaux de commandes du moteur électrique $V_d$, $V_q$, $V_f$ et les consignes de courant appliqués $I_d$ $I_q$ $I_f$ correspondent aux composantes d'un signal de commande et d'un courant suivant respectivement les axes : d, q, f.

Dans le repère de Park, un groupe motopropulseur comprenant un moteur synchrone est régi par les équations suivantes :

$$V_d = R_s \cdot I_d + L_d \cdot \frac{dI_d}{dt} + M_f \cdot \frac{dI_f}{dt} - \omega_r \cdot L_q \cdot I_q$$

$$V_q = R_s \cdot I_q + L_q \cdot \frac{dI_q}{dt} + \omega_r \left( L_d \cdot I_d + M_f \cdot I_f \right) \quad (Eq.1)$$

$$V_f = R_f \cdot I_f + L_f \cdot \frac{dI_f}{dt} + \alpha \cdot M_f \cdot \frac{dI_d}{dt}$$

Avec :

$L_d$ : Inductance équivalente d'induit sur l'axe d.
$L_q$ : Inductance équivalente d'induit sur l'axe q.
$L_f$ : Inductance du rotor.
$R_s$ : Résistance équivalente d'enroulements statoriques.
$R_f$ : Résistance du rotor.
$M_f$ : Mutuelle inductance entre le stator et le rotor.
$I_d$ : Courant sur l'axe d.
$I_q$ : Courant sur l'axe q.
$I_f$ : Courant sur l'axe f.
$\omega_r$ : Vitesse de rotation.
$V_d$ : signal de commande du moteur électrique suivant axe d

$V_q$ : signal de commande du moteur électrique suivant axe q

$V_f$ : signal de commande du moteur électrique suivant axe f

$\alpha$ : un coefficient, par exemple égal à 1.5

Les valeurs $L_d$, $L_q$, $L_f$, $R_s$, $R_f$ et $M_f$ sont par exemple connues de mesures préalables.

Les principales difficultés que présente le contrôle de ce type de système résident dans le couplage dynamique entre les axes d et f, et dans les contraintes de tension de la batterie d'alimentation équipant le véhicule.

Pour éviter le couplage dynamique entre les axes d et f, il est prévu un changement de variables : $(\tilde{V}_d, \tilde{V}_q, \tilde{V}_f)$ = $S(V_d, V_q.V_f)$, utilisant l'équation ci après :

$$V_d = \tilde{V}_d - \frac{M_f}{L_f} \cdot \left( R_f \cdot I_f + \frac{\alpha \cdot M_f}{L_d} \cdot \left( \omega_r \cdot L_q \cdot I_q - R_s \cdot I_d \right) - \tilde{V}_f \right)$$

$$V_q = \tilde{V}_q \qquad\qquad (Eq.\ 2)$$

$$V_f = \tilde{V}_f + \frac{\alpha \cdot M_f}{L_d} \cdot \tilde{V}_d$$

Le système à contrôler peut alors être représenté par les équations suivantes :

$$\tilde{V}_d = R_s \cdot I_d + L_d \cdot \frac{dI_d}{dt} - \omega_r \cdot L_q \cdot I_q$$

$$\tilde{V}_q = R_s \cdot I_q + L_q \cdot \frac{dI_q}{dt} + \omega_r \cdot \left( L_d \cdot I_d + M_f \cdot I_f \right) \qquad (Eq.\ 3)$$

$$\tilde{V}_f = R_f \cdot I_f + L_f \cdot \frac{dI_f}{dt} - \frac{3M_f}{2L_d} \cdot \left( R_s \cdot I_d - \omega_r \cdot L_q \cdot I_q \right)$$

Avec :

$\tilde{V}_d$ : Tension découplée stator sur l'axe d.

$\tilde{V}_q$ : Tension stator sur l'axe q.

$\tilde{V}_f$ : Tension découplée du rotor.

Comme on peut le voir, il n'y a pas de changement de variable sur l'axe q qui ne présente pas de couplage dynamique. Le couplage dynamique est entre les axes d et f, d'où les nouvelles commandes découplées sur ces 2 axes.

Pour ce qui concerne les contraintes de tension de la batterie d'alimentation avec l'utilisation respective d'un onduleur et d'un hacheur, elles sont décrites par l'équation 4 suivante :

$$V_d^2 + V_q^2 \leq \frac{V_{bat}^2}{3}$$

$$-V_{bat} \leq V_f \leq V_{bat} \qquad (Eq.\ 4)$$

Avec $V_{bat}$, la tension de la batterie.

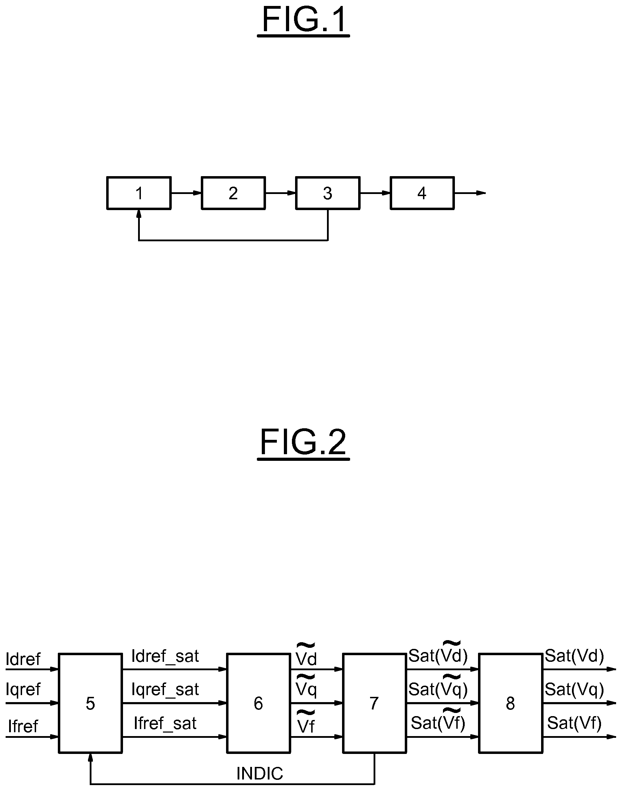

Il est proposé selon la figure 1 un procédé de commande qui permet de calculer des signaux de commandes $\tilde{V}_d$, $\tilde{V}_q$, $\tilde{V}_f$ pour contrôler les courants $I_d$, $I_q$ et $I_f$ de manière à satisfaire les demandes en couple à la roue tout en résolvant les principales difficultés mentionnées ci avant qui résident dans le couplage dynamique entre les axes d et f, et dans les contraintes de tension de la batterie d'alimentation équipant le véhicule .

Le procédé comprend une étape 1. Cette étape comprend une étape d'acquisition des consignes de courant (cf. étape 2) à savoir les consignes suivantes :

$I_d^{ref}$ : la consigne de courant stator sur l'axe d.

$I_q^{ref}$ : la consigne de courant stator sur l'axe q.

$I_f^{ref}$ : la consigne de courant du rotor sur l'axe f.

Ces consignes de courant sont directement reliées au couple demandé au moteur.

L'étape 1 comprend en outre une étape de blocage des consignes de courant $I_d^{ref}$, $I_q^{ref}$, $I_f^{ref}$ qui sera décrite plus loin dans la description. Les consignes de courant deviennent alors : $I_d^{ref}\_sat$, $I_q^{ref}\_sat$, $I_f^{ref}\_sat$.

L'étape 1 est suivi d'une étape 2 dans laquelle on régule les courants ($I_d$, $I_q$, $I_f$) du rotor et du stator avec des signaux de commande ($\tilde{V}_d$, $\tilde{V}_q$, $\tilde{V}_f$) du moteur électrique pour que les courants ($I_d$, $I_q$, $I_f$) du rotor et du stator atteignent les valeurs des consignes de courant $I_d^{ref}\_sat$, $I_q^{ref}\_sat$, $I_f^{ref}\_sat$. Pour cela, on réalise la synthèse du régulateur qui est de la forme suivante :

$$
\begin{aligned}
\tilde{V}_d &= K_d \cdot \left( I_d^{ref}\_sat - I_d \right) + K_{id} \cdot \int \left( I_d^{ref}\_sat - I_d \right) \\
\tilde{V}_q &= K_q \cdot \left( I_q^{ref}\_sat - I_q \right) + K_{iq} \cdot \int \left( I_q^{ref}\_sat - I_q \right) \quad (\text{Eq. } 5) \\
\tilde{V}_f &= K_f \cdot \left( I_f^{ref}\_sat - I_f \right) + K_{if} \cdot \int \left( I_f^{ref}\_sat - I_f \right)
\end{aligned}
$$

Avec $K_d, K_q, K_f, K_{id}, K_{iq}, K_{if}$ des paramètres de réglage.

Les courants et les signaux de commande de l'équation 5 (Eq. 5) sont exprimés dans le repère Park.

Les signaux de commande sont issus d'une première transformation comprenant un changement de variable décrit par l'équation 2 (Eq. 2). Ainsi, le régulateur permet de déterminer une tension selon l'axe d ($\tilde{V}_d$) dépendant des dérivées de courant uniquement du fait de la composante du courant suivant l'axe d ($I_d$). De même, la tension selon l'axe q ($\tilde{V}_q$) et la tension du rotor ($\tilde{V}_f$) selon l'axe f ne dépendent des dérivés du courant que par la composante du courant suivant l'axe q ($I_q$) et suivant l'axe f ($I_f$) respectivement. Les couplages dynamiques entre les axes d, q, f sont donc supprimés au niveau du régulateur. Il reste un couplage statique qui est compensé par la composante intégrale du régulateur.

L'étape de régulation comprend en outre une étape de mesure des courants $I_d$, $I_q$ et $I_f$, puis un filtrage et une mise à l'échelle de ces mesures. L'étape de régulation comprend également une étape d'acquisition des paramètres de réglage.

L'étape 2 est suivie d'une étape 3 de saturation des signaux de commande ($\tilde{V}_d$, $\tilde{V}_q$, $\tilde{V}_f$).

Pour saturer les signaux de commande calculés en étape 2, on pourrait selon une première solution non optimale calculer les commandes $V_d$, $V_q$, $V_f$ effectivement appliquées au système dans le repère de Park sans le changement de variable de l'équation 2 puis saturer ces commandes pour satisfaire les contraintes liées à la batterie dans le repère de Park conformément à l'équation 4 (Eq. 4). Cela étant, cette première solution n'est pas optimale car en effectuant la saturation dans le repère de Park sans le changement de variable de l'équation 2, on perd le découplage dynamique. En effet, dans le cas d'une saturation dans le repère de Park, la valeur des commandes ($V_d$, $V_q$, $V_f$) va être modifiée en écrêtant sans nécessairement conserver le découplage qui était présent pour les commandes $\tilde{V}_d$, $\tilde{V}_q$, $\tilde{V}_f$ issues du changement de variable. Cela peut entraîner des risques de perte de contrôle du moteur.

Dans le procédé illustré sur la figure 1 on réalise en étape 3 une saturation des commandes calculées à l'étape 2 selon une deuxième solution plus avantageuse qui comprend une saturation des commandes $\tilde{V}_d$, $\tilde{V}_q$, $\tilde{V}_f$ issues de la première transformation comprenant le changement de variable utilisant l'équation 2 (Eq. 2).

$$A_f = R_f \cdot I_f + \frac{\alpha \cdot M_f}{L_d} \cdot \left( \omega_r \cdot L_q \cdot I_q - R_s \cdot I_d \right)$$

Pour cela, on pose et on combine les équations 2 et 4 (Eq. 2 et Eq. 4), on obtient ainsi les inégalités suivantes:

$$\left( \tilde{V}_d + \frac{M_f}{L_f} \cdot \tilde{V}_f - \frac{M_f}{L_f} \cdot A_f \right)^2 + \tilde{V}_q^2 \leq \frac{V_{bat}^2}{3} \text{ et } \left( \tilde{V}_f + \frac{\alpha \cdot M_f}{L_d} \cdot \tilde{V}_d \right)^2 \leq V_{bat}^2$$

On en déduit donc les inégalités suivantes :

$$-V_{bat} \leq \tilde{V}_f + \frac{\alpha \cdot M_f}{L_d} \cdot \tilde{V}_d \leq V_{bat} \text{ et}$$

$$-\sqrt{\frac{V_{bat}^2}{3} - \tilde{V}_q^2} \leq \tilde{V}_d + \frac{M_f}{L_f} \cdot \tilde{V}_f - \frac{M_f}{L_f} \cdot A_f \leq \sqrt{\frac{V_{bat}^2}{3} - \tilde{V}_q^2}$$

Ce qui implique :

$$\frac{L_d}{\alpha.M_f} \cdot \left( -V_{bat} - \tilde{V}_f \right) \leq \tilde{V}_d \leq \frac{L_d}{\alpha.M_f} \cdot \left( V_{bat} - \tilde{V}_f \right) \qquad (\text{Eq. } 6)$$

et

$$-\sqrt{\frac{V_{bat}^2}{3} - \tilde{V}_q^2} - \frac{M_f}{L_f} \cdot \tilde{V}_f + \frac{M_f}{L_f} \cdot A_f \leq \tilde{V}_d$$

$$\tilde{V}_d \leq \sqrt{\frac{V_{bat}^2}{3} - \tilde{V}_q^2} - \frac{M_f}{L_f} \cdot \tilde{V}_f + \frac{M_f}{L_f} \cdot A_f \qquad (\text{Eq. } 7)$$

Ainsi pour assurer qu'il existe un $\tilde{V}_d$ vérifiant les équations 6 et 7 (Eq. 6), (Eq. 7), on doit avoir :

$$-\sqrt{\frac{V_{bat}^2}{3} - \tilde{V}_q^2} - \frac{M_f}{L_f} \cdot \tilde{V}_f + \frac{M_f}{L_f} \cdot A_f \leq \frac{L_d}{\alpha.M_f} \cdot \left( V_{bat} - \tilde{V}_f \right)$$

et

$$\sqrt{\frac{V_{bat}^2}{3} - \widetilde{V}_q^2} - \frac{M_f}{L_f} \cdot \widetilde{V}_f + \frac{M_f}{L_f} \cdot A_f \leq \frac{L_d}{\alpha . M_f} \cdot \left( -V_{bat} - \widetilde{V}_f \right)$$

On en déduit l'inéquation 8 (Eq. 8) suivante :

$$-\frac{1}{L_d \cdot L_f - \alpha \cdot M_f^2} \left( \alpha \cdot M_f \cdot L_f \cdot \sqrt{\frac{V_{bat}^2}{3} - \widetilde{V}_q^2} + \alpha \cdot M_f^2 \cdot A_f + L_d \cdot L_f \cdot V_{bat} \right) \leq \widetilde{V}_f$$

*et*

$$\widetilde{V}_f \leq \frac{1}{L_d \cdot L_f - \alpha \cdot M_f^2} \left( \alpha \cdot M_f \cdot L_f \sqrt{\frac{V_{bat}^2}{3} - \widetilde{V}_q^2} - \alpha \cdot M_f^2 \cdot A_f + L_d \cdot L_f \cdot V_{bat} \right)$$

$$(Eq. \ 8)$$

On est alors capable de saturer les commandes issues de la première transformation comprenant le changement de variable de l'équation 2 en définissant les bornes maximales et minimales des signaux de commande $\widetilde{V}_d$, $\widetilde{V}_q$, $\widetilde{V}_f$ :
$B \min\_\widetilde{V}_d \leq \widetilde{V}_d \leq B \max\_\widetilde{V}_d$, avec

$$B \min\_\widetilde{V}_d = \max\left( \frac{L_d}{\alpha \cdot M_f} \cdot \left( -V_{bat} - \widetilde{V}_f \right), -\sqrt{\frac{V_{bat}^2}{3} - \widetilde{V}_q^2} - \frac{M_f}{L_f} \cdot \widetilde{V}_f + \frac{M_f}{L_f} \cdot A_f \right)$$

et

$$B \max\_\widetilde{V}_d = \min\left( \frac{L_d}{\alpha \cdot M_f} \cdot \left( V_{bat} - \widetilde{V}_f \right), \sqrt{\frac{V_{bat}^2}{3} - \widetilde{V}_q^2} - \frac{M_f}{L_f} \cdot \widetilde{V}_f + \frac{M_f}{L_f} \cdot A_f \right)$$

$B \min\_\widetilde{V}_q \leq \widetilde{V}_q \leq B \max\_\widetilde{V}_q$, avec

$$B \min\_\widetilde{V}_q = -\sqrt{\frac{V_{bat}^2}{3}}$$

et

$$B \max\_\widetilde{V}_q = \sqrt{\frac{V_{bat}^2}{3}}$$

$B \min\_\widetilde{V}_f \leq \widetilde{V}_f \leq B \max\_\widetilde{V}_f$, avec

$$B\min\_\tilde{V}_f = -\frac{1}{L_d \cdot L_f - \alpha \cdot M_f^2} \cdot \left( \alpha \cdot M_f \cdot L_f \cdot \sqrt{\frac{V_{bat}^2}{3} - \tilde{V}_q^2} + \alpha \cdot M_f^2 \cdot A_f + L_d \cdot L_f \cdot V_{bat} \right)$$

et

$$B\max\_\tilde{V}_f = \frac{1}{L_d \cdot L_f - \alpha \cdot M_f^2} \left( \alpha \cdot M_f \cdot L_f \sqrt{\frac{V_{bat}^2}{3} - \tilde{V}_q^2} - \alpha \cdot M_f^2 \cdot A_f + L_d \cdot L_f \cdot V_{bat} \right)$$

Ensuite, on sature les signaux de commande $\tilde{V}_d$, $\tilde{V}_q$, $\tilde{V}_f$ c'est-à-dire que l'on écrête les signaux de commandes lorsque ces signaux sortent des intervalles définis par les bornes maximales et minimales. Pour cela, on écrête d'abord $\tilde{V}_q$ dont les bornes ne dépendent que de la valeur Vbat, puis $\tilde{V}_f$ dont les bornes ne dépendent que des valeurs Vbat et de la valeur saturée de $\tilde{V}_q$ calculée et enfin $\tilde{V}_d$ dont les bornes dépendent de la valeur Vbat et des valeurs saturées de $\tilde{V}_q$ et $\tilde{V}_f$ calculées.
En d'autres termes, on calcule sat($\tilde{V}_q$) selon l'équation suivante :

$$\mathrm{sat}(\tilde{V}_q) = \tilde{V}_q, \ \mathrm{si} \ B\min\_\tilde{V}_q \le \tilde{V}_q \le B\max\_\tilde{V}_q$$

$$\mathrm{sat}(\tilde{V}_q) = B\min\_\tilde{V}_q, \mathrm{si} \ \tilde{V}_q < B\min\_\tilde{V}_q$$

$$\mathrm{sat}(\tilde{V}_q) = B\max\_\tilde{V}_q, \mathrm{si} \ \tilde{V}_q > B\max\_\tilde{V}_q$$

en utilisant Vbat
Puis on calcule sat($\tilde{V}_f$) selon l'équation suivante :

$$\mathrm{sat}(\tilde{V}_f) = \tilde{V}_f, \ \mathrm{si} \ B\min\_\tilde{V}_f \le \tilde{V}_f \le B\max\_\tilde{V}_f$$

$$\mathrm{sat}(\tilde{V}_f) = B\min\_\tilde{V}_f, \mathrm{si} \ \tilde{V}_f < B\min\_\tilde{V}_f$$

$$\mathrm{sat}(\tilde{V}_f) = B\max\_\tilde{V}_f, \mathrm{si} \ \tilde{V}_f > B\max\_\tilde{V}_f$$

en utilisant la valeur Vbat et la valeur sat($\tilde{V}_q$) calculée
Puis on calcule sat($\tilde{V}_d$) selon l'équation suivante :

$$\mathrm{sat}(\tilde{V}_d) = \tilde{V}_d, \ \mathrm{si} \ B\min\_\tilde{V}_d \le \tilde{V}_d \le B\max\_\tilde{V}_d$$

$$\mathrm{sat}(\tilde{V}_d) = B\min\_\tilde{V}_d, \mathrm{si} \ \tilde{V}_d < B\min\_\tilde{V}_d$$

$$\mathrm{sat}(\tilde{V}_d) = B\max\_\tilde{V}_d, \mathrm{si} \ \tilde{V}_d > B\max\_\tilde{V}_d$$

en utilisant la valeur Vbat et les valeurs sat($\tilde{V}_q$) et sat($\tilde{V}_f$).
En étape 1, afin de garder un contrôle total des courants, on procède à un blocage sur les consignes de courant

$I_d^{ref}$, $I_q^{ref}$, $I_f^{ref}$ pour obtenir les consignes de courant $I_d^{ref}\_sat$, $I_q^{ref}\_sat$ et $I_f^{ref}\_sat$ selon le principe suivant :

Si $\tilde{V}_d$ atteint sa borne maximale $B\max\_\tilde{V}_d$ on arrête d'augmenter la consigne en $I_d$. En effet, d'après l'équation 3 (Eq. 3), cela conduirait à augmenter encore plus $\tilde{V}_d$. De même, on ne diminue pas la consigne en $I_q$. Enfin on n'augmente pas la consigne en $I_f$. En effet, en bloquant l'augmentation de la consigne en $I_f$ on évite d'après l'équation 3 (Eq. 3) une augmentation de $\tilde{V}_f$ qui ferait diminuer la borne maximale de $\tilde{V}_d$ $B\max\_\tilde{V}_d$ selon les équations 6 et 7 (Eq. 6, Eq. 7).

Si $\tilde{V}_d$ atteint sa borne minimale $B\min\_\tilde{V}_d$ on arrête de diminuer la consigne en $I_d$. En effet, d'après l'équation 3 (Eq. 3), cela conduirait à diminuer encore plus $\tilde{V}_d$. De même, on n'augmente pas la consigne en $I_q$. Enfin on ne diminue pas la consigne en $I_f$. En effet la diminution de la consigne en $I_f$ entrainerait la diminution de $\tilde{V}_f$ d'après l'équation 3 (Eq. 3) et une augmentation consécutive de la borne minimale de $\tilde{V}_d$ $B\min\_\tilde{V}_d$ selon les équations 6 et 7 (Eq. 6, Eq. 7).

Si $\tilde{V}_q$ atteint sa borne maximale $B\max\_\tilde{V}_q$, alors il ne faut plus augmenter aucune consigne de courant d'après l'équation 3 (Eq. 3).

De même, si $\tilde{V}_q$ atteint sa borne minimale $B\min\_\tilde{V}_q$ alors il ne faut plus diminuer aucune consigne de courant.

Enfin, si $\tilde{V}_f$ atteint l'une de ses bornes $B\min\_\tilde{V}_f$ ou $B\max\_\tilde{V}_f$, ce phénomène n'est que temporaire car l'axe f ne supporte que des faibles courants. Cela va donc créer donc une saturation dynamique de l'évolution du courant dans le rotor mais cela ne pose pas de problème de stabilité. Il n'est pas nécessaire de saturer une des consignes de courant dans ce cas.

Enfin dans l'étape 4, on procède à une deuxième transformation comprenant un changement de variable inverse du changement de variable de l'équation 2 (Eq. 2). En d'autres termes, on calcule les signaux de commandes saturés sat($V_d$), sat($V_q$), sat($V_f$) dans le repère de Park sans changement de variable en fonction des signaux de commandes saturées sat($\tilde{V}_d$), sat($\tilde{V}_q$), sat($\tilde{V}_f$) en utilisant l'équation 2 de changement de variable (Eq. 2). Les signaux de commande sat($V_d$), sat($V_q$), sat($V_f$) sont alors appliqués au moteur synchrone. Plus précisément on applique au stator les signaux sat($V_d$), sat($V_q$) et au rotor le signal sat($V_f$).

Le procédé de commande obtenu est performant d'un point de vu de la fiabilité et robuste vis-à-vis des perturbations. Il permet une saturation qui ne perturbe pas le découplage dynamique du changement de variable. On évite ainsi les risques d'emballement et de perte de contrôle du moteur.

Sur la figure 2, on peut voir un dispositif de commande comprenant un moyen de blocage des consignes de courant 5 qui applique le blocage des courants décrit en étape 1 du procédé. Le moyen de blocage comprend également un moyen d'acquisition des consignes de courant, à savoir :

$I_d^{ref}$ : la consigne de courant stator sur l'axe d.

$I_q^{ref}$ : la consigne de courant stator sur l'axe q.

$I_f^{ref}$ : la consigne de courant du rotor sur l'axe f.

Le moyen de blocage 5 comprend un moyen de réception d'une indication INDIC qui indique si une des commandes $\tilde{V}_d$, $\tilde{V}_q$, $\tilde{V}_f$ a atteint les bornes minimales et maximales définies dans l'étape 4 du procédé. En fonction de cette indication de saturation, le moyen de blocage bloque les consignes de courant $I_d^{ref}$ $I_q^{ref}$ $I_f^{ref}$ correspondant comme cela est défini pour l'étape 1 du procédé.

Le moyen de blocage 5 est relié en sortie à un moyen de régulation 6 des intensités du rotor et du stator $I_d$, $I_q$ et $I_f$. Pour cela, le moyen de régulation 6 applique l'équation 5 (Eq. 5).

Le dispositif de commande est relié à des capteurs. Le moyen de régulation comprend un moyen de traitement des signaux des capteurs et un moyen d'acquisition de données. Le moyen de traitement est apte à filtrer et mettre à l'échelle les signaux reçus de capteurs.

Parmi les signaux reçus issus des capteurs, on compte les mesures des courants $I_d$, $I_q$ et $I_f$ et éventuellement les valeurs $L_d$, $L_q$, $L_f$, $R_s$, $R_f$ et $M_f$.

Parmi les données acquises par le moyen d'acquisition on compte les paramètres de réglage $K_d$, $K_q$, $K_f$, $K_{id}$, $K_{iq}$, $K_{if}$.

Le moyen de régulation 6 est relié en sortie au moyen de saturation 7. Le moyen de saturation sature les signaux de commande $\tilde{V}_d$, $\tilde{V}_q$, $\tilde{V}_f$ issus de ladite première transformation selon l'étape 3 du procédé pour obtenir les signaux sat($\tilde{V}_d$), sat($\tilde{V}_q$) et sat($\tilde{V}_f$).

Le moyen de saturation 7 est relié en sortie à un moyen de transformation 8 apte à déterminer les signaux sat($V_d$), sat($V_q$), sat($V_f$) en fonction des signaux transformés sat($\tilde{V}_d$), sat($\tilde{V}_q$) et sat($\tilde{V}_f$). Le moyen de transformation 8 applique pour cela l'équation 2 (Eq. 2). Les signaux de commande sat($V_d$), sat($V_q$), sat($V_f$) sont alors appliqués au moteur synchrone. Plus précisément on applique au stator les signaux sat($V_d$), sat($V_q$) et au rotor le signal sat($V_f$).

Le moyen de saturation 7 est configuré pour transmettre au moyen de blocage 5 l'indication de saturation INDIC. Pour cela il comprend des moyens de communication de l'information INDIC.

**Revendications**

1. Procédé de commande d'un groupe motopropulseur équipant un véhicule automobile et comprenant un moteur électrique muni d'un rotor et d'un stator, comprenant :

    - une régulation (2) des courants ($I_d$, $I_q$, $I_f$) du rotor et du stator grâce à des signaux de commande ($\tilde{V}_d$, $\tilde{V}_q$, $\tilde{V}_f$) du moteur électrique, lesdits courants ($I_d$, $I_q$, $I_f$) et lesdits signaux de commande ($\tilde{V}_d$, $\tilde{V}_q$, $\tilde{V}_f$) étant exprimés dans un repère tournant et comprenant une pluralité d'axes, lesdits signaux de commande ($\tilde{V}_d$, $\tilde{V}_q$, $\tilde{V}_f$) étant issus d'une première transformation comprenant un changement de variable permettant le découplage dynamique entre les signaux de commande ($\tilde{V}_d$, $\tilde{V}_q$, $\tilde{V}_f$) suivant chacun des axes de ladite pluralité d'axes;
    chartérise en ce que le procédé comprend
    - une saturation (3) desdits signaux de commande (sat($\tilde{V}_d$), sat($\tilde{V}_q$), sat($\tilde{V}_f$)) issus de ladite première transformation pour satisfaire les contraintes liées à une batterie équipant le véhicule automobile et connectée au moteur électrique en écrêtant les signaux de commandes (~$V_d$,~$V_q$,~$V_f$) lorsque ces signaux sortent des intervalles définis par les bornes maximales et minimales dépendant de la valeur de la tension de batterie (Vbat); et

    - un blocage (1) d'une partie au moins des consignes de courant de la régulation ( $I_d^{ref}$ $I_q^{ref}$ $I_f^{ref}$ ) si les signaux de commande sont saturés.

2. Procédé selon la revendication 1, comprenant en outre une deuxième transformation (4) comprenant un changement de variable inverse dudit changement de variable permettant le découplage dynamique de manière à exprimer les signaux de commande après saturation (sat($V_d$), sat($V_q$), sat($V_f$)) dans ledit repère tournant sans changement de variable.

3. Procédé selon l'une quelconque des revendications précédentes, comprenant en outre une communication d'une information (INDIC) relative à la saturation des signaux de commande et le blocage (1) des consignes de courant de la régulation ( $I_d^{ref}$ $I_q^{ref}$ $I_f^{ref}$ ) est réalisé en fonction de cette information.

4. Procédé selon l'une quelconque des revendications précédentes, dans laquelle le repère dans lequel lesdits courants ($I_d$, $I_q$, $I_f$) et lesdits signaux de commande ($\tilde{V}_d$, $\tilde{V}_q$, $\tilde{V}_f$) sont exprimés est un repère de Park.

5. Système de commande d'un groupe motopropulseur équipant un véhicule automobile et comprenant un moteur électrique muni d'un rotor et d'un stator, comprenant :

    - des moyens de régulation (6) des courants ($I_d$, $I_q$, $I_f$) du rotor et du stator grâce à des signaux de commande ($\tilde{V}_d$, $\tilde{V}_q$, $\tilde{V}_f$) du moteur électrique, lesdits courants ($I_d$, $I_q$, $I_f$) et lesdits signaux de commande ($\tilde{V}_d$, $\tilde{V}_q$, $\tilde{V}_f$) étant exprimés dans un repère tournant et comprenant une pluralité d'axes, lesdits signaux de commande ($\tilde{V}_d$, $\tilde{V}_q$, $\tilde{V}_f$) étant issus d'une première transformation comprenant un changement de variable permettant le découplage dynamique des signaux de commande ($\tilde{V}_d$, $\tilde{V}_q$, $\tilde{V}_f$) suivant chacun des axes de ladite pluralité d'axes;
    chartérise en ce que le système comprend
    - des moyens de saturation (7) desdits signaux de commande (sat($V_d$), sat($V_q$), sat($V_f$)) issus de ladite première transformation pour satisfaire les contraintes liées à une batterie équipant le véhicule automobile et connectée au moteur électrique en écrêtant les signaux de commandes (~Vd,~Vq,~Vf) lorsque ces signaux sortent des intervalles définis par les bornes maximales et minimales dépendant de la valeur de la tension de batterie (Vbat); et
    - un moyen de blocage (5) configuré pour réaliser le blocage d'une partie au moins des consignes de courant des moyens de régulation ( $I_d^{ref}$ $I_q^{ref}$ $I_f^{ref}$ ) si les signaux de commandes sont saturés.

6. Système selon la revendication 5, comprenant en outre un moyen de calcul (8) d'une deuxième transformation comprenant un changement de variable inverse dudit changement de variable permettant le découplage dynamique de manière à exprimer les signaux de commande après saturation (sat($V_d$), sat($V_q$), sat($V_f$)) dans ledit repère tournant sans changement de variable.

7. Système selon l'une quelconque des revendications 5 et 6, comprenant en outre des moyens de communication (7) d'une information (INDIC) relative à la saturation des signaux de commande et le moyen de blocage (5) bloque une partie au moins des consignes de courant des moyens de régulation ( $I_d^{ref}$   $I_q^{ref}$   $I_f^{ref}$ ) en fonction de cette information.

8. Système selon l'une quelconque des revendications 5 à 7, dans lequel le repère tournant est un repère de Park.

**Patentansprüche**

1. Verfahren zur Steuerung eines Antriebsstranges, der in einem Kraftfahrzeug eingesetzt wird und einen Elektromotor umfasst, der mit einem Rotor und einem Stator versehen ist, umfassend:

    - eine Regelung (2) der Ströme ($I_d$, $I_q$, $I_f$) des Rotors und des Stators mithilfe von Steuersignalen ($\tilde{V}_d$, $\tilde{V}_q$, $\tilde{V}_f$) des Elektromotors, wobei die Ströme ($I_d$, $I_q$, $I_f$) und die Steuersignale ($\tilde{V}_d$, $\tilde{V}_q$, $\tilde{V}_f$) in einem rotierenden und eine Mehrzahl von Achsen umfassenden Koordinatensystem ausgedrückt werden, wobei die Steuersignale ($\tilde{V}_d$, $\tilde{V}_q$, $\tilde{V}_f$) aus einer ersten Transformation erhalten werden, die einen Variablenwechsel umfasst, welcher die dynamische Entkopplung der Steuersignale ($\tilde{V}_d$, $\tilde{V}_q$, $\tilde{V}_f$) entlang jeder der Achsen der Mehrzahl von Achsen ermöglicht; **dadurch gekennzeichnet, dass** das Verfahren umfasst:
    - eine Sättigung (3) der Steuersignale (sat ($\tilde{V}_d$), sat($\tilde{V}_q$), sat($\tilde{V}_f$)), die aus der ersten Transformation erhalten wurden, um die Nebenbedingungen zu erfüllen, die mit einer Batterie zusammenhängen, die in dem Kraftfahrzeug eingesetzt wird und mit dem Elektromotor verbunden ist, indem die Steuersignale ($\sim V_d$, $\sim V_q$, $\sim V_f$) geclippt werden, wenn diese Signale aus den Intervallen hervorgehen, die durch die minimalen und maximalen Schranken definiert sind, die vom Wert der Batteriespannung (Vbat) abhängen; und

    - eine Blockierung (1) wenigstens eines Teils der Stromsollwerte der Regelung ( $I_d^{ref}$ ,  $I_q^{ref}$ ,  $I_f^{ref}$ ), falls die Steuersignale gesättigt sind.

2. Verfahren nach Anspruch 1, welches außerdem eine zweite Transformation (4) umfasst, die einen Variablenwechsel umfasst, der invers zu dem Variablenwechsel ist, der die dynamische Entkopplung ermöglicht, um die Steuersignale nach Sättigung (sat($V_d$), sat($V_q$), sat($V_f$)) in dem rotierenden Koordinatensystem ohne Variablenwechsel auszudrücken.

3. Verfahren nach einem der vorhergehenden Ansprüche, welches außerdem eine Übermittlung einer Information (INDIC) umfasst, welche sich auf die Sättigung der Steuersignale bezieht, und wobei die Blockierung (1) der Stromsollwerte der Regelung ( $I_d^{ref}$ ,  $I_q^{ref}$ ,  $I_f^{ref}$ ) in Abhängigkeit von dieser Information vorgenommen wird.

4. Verfahren nach einem der vorhergehenden Ansprüche, wobei das Koordinatensystem, in welchem die Ströme ($I_d$, $I_q$, $I_f$) und die Steuersignale ($\tilde{V}_d$, $\tilde{V}_q$, $\tilde{V}_f$) ausgedrückt werden, ein Park-Koordinatensystem ist.

5. System zur Steuerung eines Antriebsstranges, der in einem Kraftfahrzeug eingesetzt wird und einen Elektromotor umfasst, der mit einem Rotor und einem Stator versehen ist, umfassend:

    - Mittel zur Regelung (6) der Ströme ($I_d$, $I_q$, $I_f$) des Rotors und des Stators mithilfe von Steuersignalen ($\tilde{V}_d$, $\tilde{V}_q$, $\tilde{V}_f$) des Elektromotors, wobei die Ströme ($I_d$, $I_q$, $I_f$) und die Steuersignale ($\tilde{V}_d$, $\tilde{V}_q$, $\tilde{V}_f$) in einem rotierenden und eine Mehrzahl von Achsen umfassenden Koordinatensystem ausgedrückt werden, wobei die Steuersignale ($\tilde{V}_d$, $\tilde{V}_q$, $\tilde{V}_f$) aus einer ersten Transformation erhalten werden, die einen Variablenwechsel umfasst, welcher die dynamische Entkopplung der Steuersignale ($\tilde{V}_d$, $\tilde{V}_q$, $\tilde{V}_f$) entlang jeder der Achsen der Mehrzahl von Achsen ermöglicht;

    **dadurch gekennzeichnet, dass** das System umfasst:

    - Mittel zur Sättigung (7) der Steuersignale (sat($\tilde{V}_d$), sat($\tilde{V}_q$), sat($\tilde{V}_f$)), die aus der ersten Transformation erhalten wurden, um die Nebenbedingungen zu erfüllen, die mit einer Batterie zusammenhängen, die in dem Kraftfahrzeug eingesetzt wird und mit dem Elektromotor verbunden ist, indem die Steuersignale ($\sim V_d$, $\sim V_q$, $\sim V_f$) geclippt

werden, wenn diese Signale aus den Intervallen hervorgehen, die durch die minimalen und maximalen Schranken definiert sind, die vom Wert der Batteriespannung (Vbat) abhängen; und
- ein Blockierungsmittel (5), das dafür ausgelegt ist, die Blockierung wenigstens eines Teils der Stromsollwerte der Regelungsmittel ( $I_d^{ref}$ , $I_q^{ref}$ , $I_f^{ref}$ ) durchzuführen, falls die Steuersignale gesättigt sind.

6. System nach Anspruch 5, welches außerdem ein Mittel zur Berechnung (8) einer zweiten Transformation umfasst, die einen Variablenwechsel umfasst, der invers zu dem Variablenwechsel ist, der die dynamische Entkopplung ermöglicht, um die Steuersignale nach Sättigung (sat(V$_d$), sat(V$_q$), sat(V$_f$)) in dem rotierenden Koordinatensystem ohne Variablenwechsel auszudrücken.

7. System nach einem der Ansprüche 5 und 6, welches außerdem Mittel zur Übermittlung (7) einer Information (INDIC) umfasst, welche sich auf die Sättigung der Steuersignale bezieht, und wobei das Blockierungsmittel (5) wenigstens einen Teil der Stromsollwerte der Regelungsmittel ( $I_d^{ref}$ , $I_q^{ref}$ , $I_f^{ref}$ ) in Abhängigkeit von dieser Information blockiert.

8. System nach einem der Ansprüche 5 bis 7, wobei das rotierende Koordinatensystem ein Park-Koordinatensystem ist.

**Claims**

1. Method for controlling a power train installed in a motor vehicle and comprising an electric motor provided with a rotor and a stator, comprising:

- regulation (2) of the rotor and stator currents ($I_d$, $I_q$, $I_f$) via control signals ($\tilde{V}_d$, $\tilde{V}_q$, $\tilde{V}_f$) for the electric motor, said currents ($I_d$, $I_q$, $I_f$) and said control signals ($\tilde{V}_d$, $\tilde{V}_q$, $\tilde{V}_f$) being expressed in a revolving reference frame and comprising a plurality of axes, said control signals ($\tilde{V}_d$, $\tilde{V}_q$, $\tilde{V}_f$) being derived from a first transformation comprising a change of variable allowing for dynamic decoupling between the control signals ($\tilde{V}_d$, $\tilde{V}_q$, $\tilde{V}_f$) along each of the axes of said plurality of axes;

**characterized in that** the method comprises:

- saturation (3) of said control signals (sat($\tilde{V}_d$), sat($\tilde{V}_q$), sat($\tilde{V}_f$)) obtained from said first transformation to satisfy the constraints associated with a battery installed in the motor vehicle and connected to the electric motor by clipping the control signals ($\tilde{V}_d$, $\tilde{V}_q$, $\tilde{V}_f$) when these signals depart from the bands defined by the maximum and minimum limits depending on the value of the battery voltage (Vbat); and

- blocking (1) of at least some of the regulation current setpoints ( $I_d^{ref}$ $I_q^{ref}$ $I_f^{ref}$ ) if the control signals are saturated.

2. Method according to Claim 1, also comprising a second transformation (4) comprising a change of variable that is the reverse of said change of variable allowing for dynamic decoupling so as to express the control signals after saturation (sat(Vd), sat(V$_q$), sat(V$_f$)), in said revolving reference frame without a change of variable.

3. Method according to any one of the preceding claims, also comprising a communication of information (INDIC) relating to the saturation of the control signals and the blocking (1) of the regulation current setpoints ( $I_d^{ref}$ $I_q^{ref}$ $I_f^{ref}$ ) is performed on the basis of this information.

4. Method according to any one of the preceding claims, in which the reference frame in which said currents ($I_d$, $I_q$, $I_f$) and said control signals ($\tilde{V}_d$, $\tilde{V}_q$, $\tilde{V}_f$) are expressed is a Park reference frame.

5. System for controlling a power train installed in a motor vehicle and comprising an electric motor provided with a rotor and a stator, comprising:

- means for regulating (6) the rotor and stator currents ($I_d$, $I_q$, $I_f$) using control signals ($\tilde{V}_d$, $\tilde{V}_q$, $\tilde{V}_f$) for the electric motor, said currents ($I_d$, $I_q$, $I_f$) and said control signals ($\tilde{V}_d$, $\tilde{V}_q$, $\tilde{V}_f$) being expressed in a revolving reference frame and comprising a plurality of axes, said control signals ($\tilde{V}_d$, $\tilde{V}_q$, $\tilde{V}_f$) being obtained from a first transformation comprising a change of variable allowing for the dynamic decoupling of the control signals ($\tilde{V}_d$, $\tilde{V}_q$, $\tilde{V}_f$) along each of the axes of said plurality of axes;

**characterized in that** the system comprises:

- means (7) for saturating said control signals (sat($\tilde{V}_d$), sat($\tilde{V}_q$), sat($\tilde{V}_f$)) obtained from said first transformation to satisfy the constraints associated with a battery installed in the motor vehicle and connected to the electric motor by clipping the control signals ($\tilde{V}_d$, $\tilde{V}_q$, $\tilde{V}_f$) when these signals depart from the bands defined by the maximum and minimum limits depending on the value of the battery voltage (Vbat); and
- a blocking means (5) configured to perform the blocking of at least some of the current setpoints of the regulation means ( $I_d^{ref}$   $I_q^{ref}$   $I_f^{ref}$ ) if the control signals are saturated.

6. System according to Claim 5, also comprising a means (8) for computing a second transformation comprising a change of variable that is the reverse of said change of variable allowing for the dynamic decoupling so as to express the control signals after saturation (sat(Vd), sat($V_q$), sat($V_f$)) in said revolving reference frame without a change of variable.

7. System according to any one of Claims 5 or 6, also comprising means (7) for communicating information (INDIC) relating to the saturation of the control signals and the blocking means (5) blocks at least some of the current setpoints of the regulation means ( $I_d^{ref}$   $I_q^{ref}$   $I_f^{ref}$ ) on the basis of this information.

8. System according to any one of Claims 5 to 7, in which the revolving reference frame is a Park reference frame.

# FIG.1

```
┌─────┐    ┌─────┐    ┌─────┐    ┌─────┐
│  1  │───▶│  2  │───▶│  3  │───▶│  4  │────▶
└─────┘    └─────┘    └─────┘    └─────┘
   ▲                     │
   └─────────────────────┘
```

# FIG.2

```
Idref  ──▶┌─────┐ Idref_sat ──▶┌─────┐  Ṽd ──▶┌─────┐ Sat(Ṽd) ──▶┌─────┐ Sat(Vd) ──▶
Iqref  ──▶│  5  │ Iqref_sat ──▶│  6  │  Ṽq ──▶│  7  │ Sat(Ṽq) ──▶│  8  │ Sat(Vq) ──▶
Ifref  ──▶└─────┘ Ifref_sat ──▶└─────┘  Ṽf ──▶└─────┘ Sat(Ṽf) ──▶└─────┘ Sat(Vf) ──▶
             ▲                                    │
             └──────────────INDIC─────────────────┘
```

**RÉFÉRENCES CITÉES DANS LA DESCRIPTION**

**Documents brevets cités dans la description**

- US 3851234 A
- US 5015937 A
- US 6181091 B